# EUROPEAN PATENT APPLICATION

(11) **EP 3 416 345 A1**
(43) Date of publication of application: **19.12.2018**
(21) Application number: 17176449.1
(22) Date of filing: 16.06.2017
(51) Int. Cl.: H04L 29/06, G06F 21/57

(54) **PROCESS FOR ESTIMATING A MEAN TIME FOR AN ATTACKER TO COMPROMISE A VULNERABILITY (MTACV) OF A COMPUTER SYSTEM**

(71) Applicant: Nokia Technologies Oy, 02610 Espoo (FI)
(72) Inventor: EL ABED, Haithem, 91620 Nozay (FR); PAPILLON, Serge, 91620 Nozay (FR); DUBUS, Samuel, 91620 Nozay (FR)
(74) Representative: Sayettat, Julien Christian

(57) **Abstract**

Process for estimating a Mean Time for an Attacker to Compromise a Vulnerability (MTACV) (T) of a computer system, said process providing steps for: gathering (TP1) from information sources (Db1, Db2) attributes (A, A1, A2) about known vulnerabilities (V) of said computer system, comprising at least a Time To Be Exploited (TTBE) (A1) and an Exposure Time (ET) (A2) corresponding to mean times necessary for an attacker respectively to develop an exploit software tool for a vulnerability (V) and to effectively compromise it, the MTACV time (T) of a vulnerability (V) corresponding to a combination of its TTBE (A1) and ET (A2) times; creating (TP2) a reference dataset (D) with said gathered attributes; training (TP3) a Machine Learning device (3) with said reference dataset to determine from said attributes a transformation function F allowing for computing the MTACV time (T) for a given vulnerability from known attributes (A, A1, A2) of said vulnerability; said process further providing, for each new vulnerability (V), for using (EP) the determined function F with known attributes (A, A1, A2) of said new vulnerability, to compute its MTACV time (T).

## Description

The invention relates to a process for estimating a Mean Time for an Attacker to Compromise a Vulnerability (MTACV) of a computer system, a computer program adapted to perform such a process, a computer readable storage medium comprising instructions to cause a data processing apparatus to carry out such a process, and a system comprising means for implementing such a process.

A lot of computer systems, especially centralised systems such as networks and software currently used by industries and/or associations, are riddled with known vulnerabilities that attackers can potentially exploit it order to compromise them, notably for accessing to confidential information for fraudulent use. For example, the use of such computer systems is widespread in the field of medical governmental associations, especially social welfare associations, but such associations cannot install security patches without risking to invalidate the approval of their governments, so that their computer systems are particularly vulnerable to compromising attacks.

For avoiding such attacks, it is crucial to be able to quantify the risk associated with the exposure of known vulnerable computer systems to potential threat agents, especially attackers that may aim at harming the organisations that rely on said computer systems for some fraudulent business.

In a known manner, an important component of assessing a risk is the determination of the likelihood of attack scenarios which are possible on the network infrastructure of an organisation.

In particular, methods have been proposed for estimating the likelihood of compromising a vulnerability on a critical device of an Information Technology (IT) network, i.e. a device of an IT infrastructure which has been identified as critical for the business of the organisation exploiting it in an asset. These methods especially rely on the computing of a metric, i.e. the likelihood, on known attack scenarios that may lead to the compromising of that vulnerability from identified entry points in the network infrastructure.

More precisely, these methods provide to model attack scenarios as sequences or chains, i.e. Attack Paths, or graphs, i.e. Attack Graphs, of compromised vulnerabilities, as described in further details in the following articles: "An Attack Graph-Based Probabilistic Security Metric" (L. WANG, T.A. ISLAM, T. LONG, A. SINGHAL, S. JAJODIA, Data and Applications Security XXII, Springer Berlin Heidelberg, pp. 283-296, 2008), ""Towards Dynamic Risk Management: Success Likelihood of Ongoing Attacks" (W. KANOUN, S. DUBUS, S. PAPILLON, N. CUPPENS-BOULAHIA, F. CUPPENS, Bell Labs Technical Journal, vol. 17(3), pp. 61-78, 2012) and "Coordination and Concurrency Aware Likelihood Assessment of Simultaneous Attacks" (L. SAMARJI, N. CUPPENS-BOULAHIA, F. CUPPENS, S. PAPILLON, W. KANOUN, S. DUBUS, 2014 International Conference on Security and Privacy in Communication Systems, Springer International Publishing, pp. 524-529, September 24, 2014).

Moreover, although the determination of Attack Graphs or Attack Paths requires preliminary steps for computing a likelihood, there exist some researches works that aim at addressing this goal by using connectivity graphs between network nodes, vulnerabilities on these nodes, and attack models, such as for example logical models based on pre- and post-conditions of the exploitation of each vulnerability. In particular, further explanations can be found in the following articles: "Automated Generation and Analysis of Attack Graphs" (O. SHEYNER, J. HAINES, S. JHA, R. LIPPMANN, J.M. WING, 2002 IEEE Symposium on Security and Privacy, Oakland, California, USA, pp. 254-265, 2002) and "MuIVAL: A Logic-Based Network Security Analyser" (X. OU, S. GOVINDAVAJHALA, A.W. APPEL, 14th USENIX Security Symposium, Baltimore, MD, USA, August 2005).

Generally speaking there are two great kinds of methods to compute the likelihood on Attack Paths or Graphs, which are on one hand probability approaches, based on assessing the probability of compromising a vulnerability of a node in the Attack Graph from another node, and on the other hand temporal methods, based on the assessment of the mean sojourn time or exit rate in nodes of an Attack Path.

The article "Elementary Risks: Bridging Operational and Strategic Security Realms" (W. KANOUN, S. PAPILLON, S. DUBUS, 11th International Conference on Signal-Image Technology & Internet-Based Systems (SITIS), 2015) explains in particular a method which computes the likelihood of an attack scenario (i.e. an Attack Path) based on modelling of this attack scenario as an equivalent Markov chain. Actually, in this method, assumption is made that the mean sojourn time or the exit rate in a step of the Markov chain is fixed to a value proportional to the parameters of the CVSS metric attributes related to the difficulty of exploiting the vulnerability that enables compromising this step. More particularly, the exit rate can be equal to this value, whereas the mean sojourn time is itself equal to the mathematic expectation of the random variable associated to the step, which, when following an exponential probabilistic law, is equal to 1/exit rate.

Both of these two above-mentioned approaches share the idea that the compromising of a considered vulnerability in a specific context, for example linked to the network topology of an organisation, depends from the compromising of other vulnerabilities that may enable the compromising of the considered vulnerability from one of the identified entry points.

Most of the likelihood approaches base their assessment, be it derived from a probability or a mean sojourn time, on metrics of public databases which assess different parameters of the difficulty to exploit a known vulnerability of the infrastructure, such as for example the various metrics of the Common Vulnerability Scoring System (CVSS) provided by the National Vulnerability Database (NVD) of the US government.

However, the different metrics of CVSS scores carrying the information on the difficulty to exploit a given vulnerability provided in the NVD database (i.e. in particular Access Vector, Access Complexity, Authentication, Exploitability metrics and/or Report Confidence) are assessed through a consensus between the community of security experts contributing to that database. Thus, their assessment are by nature imprecise, unverifiable and not necessarily based on a tangible measurement of the difficulty based on the observations of occurrences of attacks exploiting that vulnerability.

Moreover, from those metrics for a given vulnerability, which are translated in scalar values with no dimension, it is difficult, if not rationally unjustifiable, to assess the probability of a mean time for an attacker to compromise a node with this vulnerability from another node in a given network infrastructure.

Besides, the performing of the likelihood of attack scenarios are generally performed by human security experts which test themselves several of such attack scenarios on a given computer system to evaluate the most probable one according to the difficulties they encountered during said scenarios, said difficulty being notably reflected by the mean time spent on said scenarios. However, such a method forces people to spend huge amount of time and money on the risk assessment, notably for a result that may present some mistakes due to human errors.

The invention aims to improve the prior art by proposing notably a process enabling the precise estimation of the mean time necessary for an attacker, i.e. a threat agent, to compromise a vulnerability of a computer system, especially in the context of a given attack scenario, in order to feed the various approaches that compute likelihood metrics.

For that purpose, and according to a first aspect, the invention relates to a process for estimating a Mean Time for an Attacker to Compromise a Vulnerability (MTACV) of a computer system, said process providing for:
- a training procedure, which provides:
   ∘ a step for gathering from information sources attributes about known vulnerabilities of said computer system, said attributes comprising at least a Time To Be Exploited (TTBE) and an Exposure Time (ET) corresponding to mean times necessary for an attacker respectively to develop an exploit software tool for a vulnerability and to effectively compromise said vulnerability, the MTACV time of a vulnerability corresponding to a combination of TTBE and ET times of said vulnerability;
   ∘ a step for creating a reference dataset with said gathered attributes;
   ∘ a step for training a Machine Learning device with said reference dataset to determine a transformation function F from said gathered attributes, said transformation function F allowing for computing the MTACV time for a given vulnerability from known attributes of said vulnerability;
- a MTACV time estimation procedure, which provides, for each new vulnerability of said computer system, for using the determined transformation function F with known attributes of said new vulnerability, so as to compute a MTACV time for said new vulnerability.

According to a second aspect, the invention relates to a computer program adapted to perform such a process.

According to a third aspect, the invention relates to a computer readable storage medium comprising instructions to cause a data processing apparatus to carry out such a process.

According to a fourth aspect, the invention relates to a system for estimating a Mean Time for an Attacker to Compromise a Vulnerability (MTACV) of a computer system, said system comprising:
- a Machine Learning device which comprises means for using a transformation function F for computing, from known attributes of a given vulnerability, a MTACV time corresponding to a combination of a Time To Be Exploited (TTBE) and an Exposure Time (ET) of said vulnerability, said TTBE and ET times corresponding to mean times necessary for an attacker respectively to develop an exploit software tool for a vulnerability and to effectively compromise said vulnerability;
- a device for performing a training procedure of said Machine learning device, said training procedure device comprising:
   ∘ a module for gathering from information sources attributes about known vulnerabilities of said computer system, said attributes comprising at least a TTBE and an ET times;
   ∘ a module for creating a reference dataset with said gathered attributes;
   ∘ a module for training said Machine Learning device with said reference dataset to determine the transformation function F from the gathered attributes of said known vulnerabilities.

Other aspects and advantages of the invention will become apparent in the following description made with reference to the appended figures, wherein:
- figures 1 to 3 represent schematically different steps for gathering attributes about known vulnerabilities of a computer system according to an embodiment of the invention;
- figure 4 represents schematically a table presenting a reference dataset obtained by following the steps of figures 1 to 3;
- figure 5 is a flowchart representing the steps of a process according to an embodiment of the invention;
- figure 6 represents schematically a system according to an embodiment of the invention;
- figure 7 represents schematically a configuration device comprising a memory to store a computer program adapted to perform a process according to the invention;
- figure 8 represents schematically a computer-readable storage medium adapted to store instructions for allowing the carrying out of a process according to the invention.

In relation to those figures, we describe below a process for estimating a Mean Time for an Attacker to Compromise a Vulnerability (MTACV) T of a computer system, as well as a system comprising means for implementing such a process.

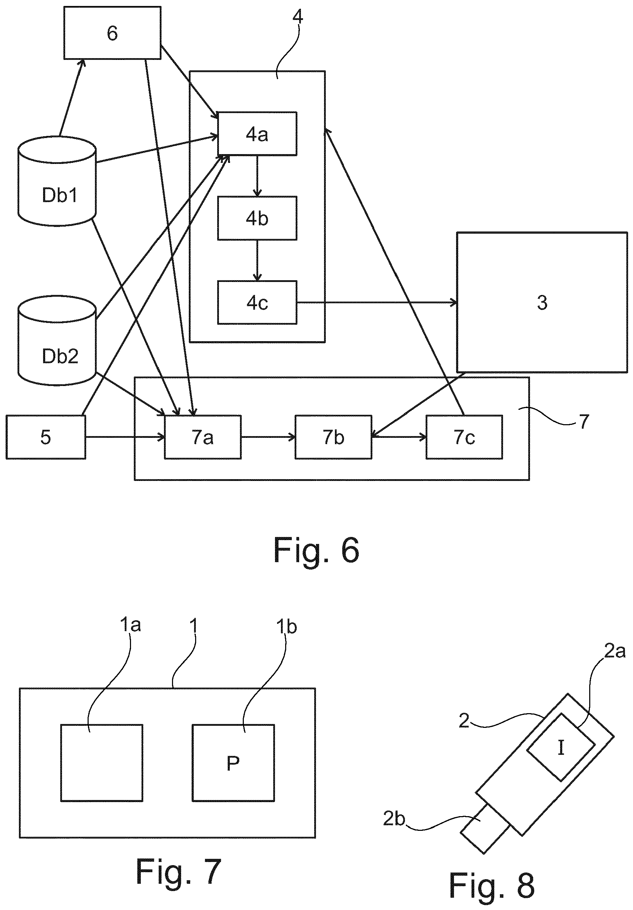

The invention also concerns a computer program P adapted to perform such a process. For example, figure 7 is a structural view of a configuration device 1, which may in particular present the general architecture of a computer. The configuration device 1 comprises a processor 1a and a memory 1b. The memory 1b stores a computer program P which, when executed by the processor 1a, causes the configuration device 1 to perform the process of the invention.

The invention also concerns a computer readable storage medium 2 comprising instructions I to cause a data processing apparatus to carry out such a process. For example, figure 8 is a structural view of such a storage medium 2, which can be notably in the form of a USB (for Universal Serial Bus) drive, said medium comprising a memory 2a for storing such instructions I and a port 2b for allowing the connection of said medium to a data processing apparatus, for example a configuration device 1 as shown on figure 7, said apparatus comprising a processor 1 a adapted to carry out the process of the invention according to the instructions I stored in the memory 2a.

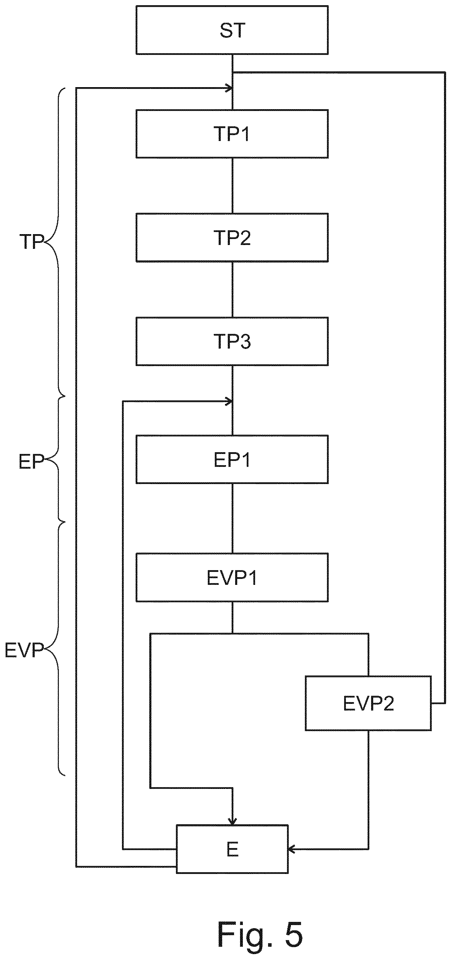

In relation to figure 5, the process comprises an initial starting step ST, which can be triggered automatically or by the invention of a human security expert.

The process provides for estimating such an MTACV time T by means of a Machine Learning device 3, and provides in particular a training procedure TP for training said Machine Learning device with a reference dataset D of known vulnerabilities V of the computer system.

To do so, the MTACV time estimation system comprises a Machine Learning device 3 adapted for doing such an estimation, as well as a device 4 for performing such a training procedure TP.

The training procedure TP provides at first a step TP1 for gathering from information sources attributes A about known vulnerabilities V of the computer system, and a consecutive step TP2 for creating the reference dataset D with said gathered attributes. To do so, the training procedure device 4 comprise a module 4a for gathering such attributes A from miscellaneous information sources, as well as a module 4b for creating such a reference dataset D.

Generally speaking, the gathered attributes A are only public-known ones, and are especially available on publically available information sources.

In particular, a reference dataset D can advantageously comprise a cluster of vulnerabilities V with relatively similar attributes A. Indeed, such vulnerabilities V may be compromised by an attacker in MTACV times T that are relatively close to one another, so that the MTACV time to compromise a further newly identified vulnerability of a computer system may be easily inferred from known MTACV times T of similar known vulnerabilities V.

The gathered attributes A of a known vulnerability V comprise at least a Time To Be Exploited (TTBE) A1 and an Exposure Time (ET) A2, which correspond to mean times necessary for an attacker respectively to develop an exploit software tool for said vulnerability, i.e. a software tool designed to take advantage of said vulnerability especially for malicious purposes, and to effectively compromise said vulnerability. Moreover, the MTACV time T of a vulnerability V corresponds to a combination of TTBE A1 and ET A2 times of said vulnerability.

Indeed, the using of these two mean times A1, A2 is particularly relevant, as the time necessary for a given attacker to compromise a vulnerability V can vary in an important manner according to several factors, including notably the complexity of the vulnerability V, but also the lifespan of said vulnerability, as well as the personal capacities and/or knowledges of said attacker. For example, the more a vulnerability V is recent, the less the probability that attackers have already tried to compromise it, especially by developing and publishing a dedicated exploit software tool, is important, so that the TTBE time A1 will play in that case a very important role in the establishment of the MTACV time T of such a recent vulnerability V. On the contrary, the more a vulnerability V is ancient, the more the probability that a dedicated exploit software tool is already available is important, so that the TTBE time A1 will be in that case almost negligible for establishing the MTACV time T of such an ancient vulnerability V.

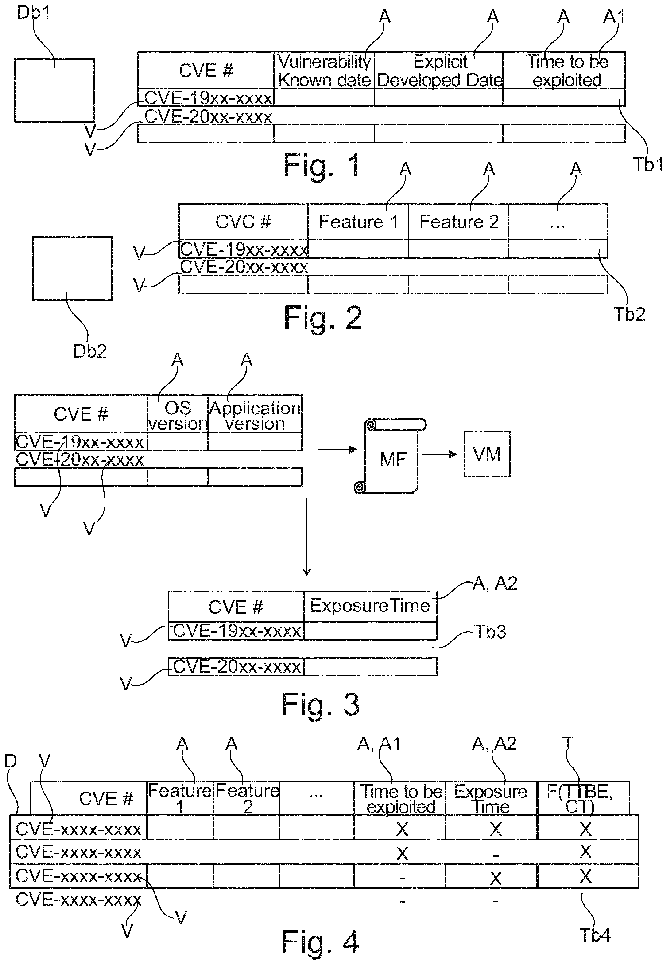

In relation to the figures, especially figures 1, 2 and 6, the process provides, during the gathering step TP1, for consulting at least one database, for example two databases Db1, Db2, for gathering attributes A, A1, A2 about known vulnerabilities V of the computer system, notably by directly retrieving them from the database(s) Db1, Db2. To do so, the gathering module 4a may comprise means for consulting such databases Db1, Db2.

In particular, the database Db1 of figure 1 comprises TTBE times A1 for known vulnerabilities V, so that said TTBE times can be gathered by being directly retrieved from said database. The database Db1 can be for example a database of the Metasploit® online computer security project, which publishes at lot of miscellaneous exploits, especially the more complex ones, and is then a very useful tool for computer systems security experts. This project currently contains 3360 modules, each module entry having multiple fields, the two following ones being particularly interesting for the invention:
- the References field, which includes links to Common Vulnerability and Exposures (CVE) databases for allowing a relation between a given exploit software tool and the concerned vulnerability(ies);
- the Development field, which includes links to the development history of the exploit software tool and the exploit software tool itself.

In relation to figure 2, the database Db2 contains other attributes A related to known vulnerabilities V of a computer system, which can notably be used to estimate the MTACV time T of said vulnerabilities. The database Db2 can be a Common Vulnerability and Exposures (CVE) database, which can notably be accessible through links with a Metasploit®-type database Db1 that has been consulted previously and/or in parallel, as stated hereinabove.

In particular, the other attributes A of the database Db2 may contain miscellaneous information related to the vulnerability V and/or the computer system, which are relevant for estimating the TTBE time A1, the ET time A2 and/or the MTACV time T of the vulnerability V. Such attributes A may be especially related to the CVSS (for Common Vulnerability Score System) score, the confidentiality impact, the integrity impact, the availability impact, the access complexity, the authentication, the gained access, the type of the vulnerability V, or the Operating System (OS) version and/or the application version of the computer system.

The process can also provide, during the gathering step TP1, to gather attributes A from information sources other than databases Db1, Db2, such as for example dedicated websites, and more particularly websites that may be potentially visited by attackers.

The TTBE time A1, and more particularly the ET time A2, may be not directly available on such information sources Db1, Db2, so that the process can also provide to obtain such times A1, A2, and then the MTACV time T of the corresponding vulnerability V, through indirect consulting and/or tests, and notably by means of other attributes A as describe hereinabove.

In particular, the process can provide, during the gathering step TP1, for gathering a TTBE time A1 and/or an ET time A2 of a vulnerability V by measuring said TTBE time and/or said ET time, the MTACV time estimating system comprising at least one dedicated module for performing such measurement(s).

To do so, the process can notably provide, during the gathering step TP1, for measuring the TTBE time A1 and/or the ET time A2 of a vulnerability V through a human testing performed by a security expert, the security expert performing for example experimental real-time tests to try to compromise a vulnerability V, either for developing a dedicated exploit software tool and/or for effectively infringing the computer system through said vulnerability, said process further measuring in real-time the time that was necessary for these tests.

In particular, the MTACV time estimation system can comprise a dedicated module 5 for allowing such a security expert to perform such a human testing, especially with means for measuring in real-time the time(s) effectively necessary for said security expert to perform said testing.

In relation to figure 3, the process advantageously provides, during the gathering step TP1, for automatically measuring the TTBE time A1 and/or the ET time A2 of a vulnerability V by means of a Virtual Machine (VM) that has been created from known attributes A of said vulnerability and deployed online to be exposed to potential attackers, said measuring being performed according to the attacks performed against said VM machine.

A virtual machine VM can be seen as a copy of the computer system to be tested, and reproduces in particular at least one cluster of similar vulnerabilities V to be tested for creating a reference dataset D. Thus, by exposing such a virtual machine VM online, it is possible to study the behaviour of the eventual attackers for compromising the vulnerabilities V, and then to measure in a particularly relevant manner the TTBE time A1 and/or the ET time A2 of said vulnerabilities, which may allow to obtain a good estimation of the MTACV time T thereof.

To do so, as represented on figure 6, the MTACV time estimation system comprises a module 6 that comprises means for creating and deploying such a virtual machine VM online, especially for helping a human security expert to perform such operations.

The virtual machine creation module 6 can notably comprise links to a dedicated application and/or a software tool, such as for example the Vagrant® open-source software product, which allows for building and maintaining portable virtual development environments. In particular, this module 6 can be adapted to allow a human security expert to create a manifest file MF and/or a configuration file comprising relevant attributes A, such as for example the OS version and/or the application version of the computer system, and then to provide said manifest file to such an application and/or software tool, which then uses said manifest file for automatically generating the virtual machine VM.

The virtual machine creation module 6 can also comprise means for allowing the deployment of the generated virtual machine VM online to be exposed to potential attackers, for example through a honeypot security mechanism, which consists in a part of a computer system that appears to be legitimate, but is actually isolated therefrom for avoiding real attacks on said computer system and can be monitored by human security experts for studying the behaviour of the attackers.

In relation to figures 1 to 3, the gathering module 4a can comprise means for merging gathered attributes A, A1, A2 from a given information source Db1, Db2 into respectively a table Tb1, Tb2, Tb3. Similarly, as represented on figure 4, the gathering module 4a can comprise means for merging all the gathered attributes A, A1, A2, T into a global table Tb4, the module 4b for creating the reference dataset D being adapted to select similar vulnerabilities V within the global table Tb4, notably through an analysis and/or a comparison of their respective attributes A, and then to gather said similar vulnerabilities into a cluster for creating said reference dataset.

Once the reference dataset D has been created, the process provides a consecutive step TP3 for training the Machine Learning device 3 with said reference dataset to determine a transformation function F from the gathered attributes A, A1, A2, the transformation function F allowing for computing the MTACV time T for a given vulnerability V from known attributes A1, A1, A2 of sais vulnerability. To do so, the training procedure device 4 of the MTACV time estimation system comprise a module 4c for performing such a training.

The training module 4c can provide for interacting with the Machine Learning device 3 to build from the attributes A, A1, A2 of the reference dataset D a model of data, for example according to a Generalized Linear Model (GLM), of which the dependent variable will be the transformation function F, which is adapted to estimate the TTBE time A1 and the ET time A2, or even the MTACV time T of a given vulnerability V, from other known attributes A of said vulnerabilities.

In particular, the training module 4c may provide to discard in the reference dataset D the content of columns dedicated to the TTBE time A1 and the ET time A2 during the step TP3 for training of the Machine Learning device 3, and then to restore said content at the end of said training step to test the determined transformation function F by comparing, for the vulnerabilities V of the reference dataset D, the times A1, A2 computed by said function F and the real values of said times contained in said columns, the transformation function F being considered as relevant enough if the computed time values are sufficiently close to the gathered real time values.

Once a relevant transformation function F has been determined, the process then provides an estimation procedure EP which provides, by implementing a dedicated step EP1, for each new vulnerability of the computer system, for using said determined function F with known attributes A, A1, A2 of said new vulnerability, so as to compute a MTACV time T for said new vulnerability. To do so, the Machine Learning device 3 comprises dedicated means for using the determined transformation function F on new vulnerabilities of the computer system for computing a MTACV time T for each of them.

In particular, during the estimation procedure EP, EP1, the process may provide for filling the empty rows of the global table Tb4 with each newly identified vulnerability, and for filling each cells of said rows with the attributes A gathered from information sources Db1, Db2, and then for filling the cells dedicated to the TTBE time A1, the ET time A2 and/or the MTACV time T with the values obtained by using the transformation function F with said gathered attributes.

The process can be used in a global procedure for evaluating the most probable attack paths for a given computer system, especially upon calculation of a global time estimation for each of the possible attack paths, notably by summing all of the MTACV times T computed for each of the vulnerabilities involved in said attack path. Then, the global time estimations can be used to classify the attack paths, the more probable attack paths being those with the less important global time estimations.

According to an embodiment, to improve the evaluation of the possible attacks paths of a computer system, the process can provide for computing, in parallel to the computing of a MTACV time T for a vulnerability by the transformation function F, a precision rate for said computing, said precision rate depending for example from the number and/or the type of known attributes A gathered for said vulnerability. To do so, the Machine Learning device 3 can comprise means for performing such a precision rate calculation.

Indeed, at the time of the operation of the Machine Learning device 3, all of the attributes A of a vulnerability are not always available, especially when said vulnerability is very recent, which is all the more true concerning the attributes A that are the most relevant for a precise estimation of the MTACV time T of the vulnerability. Thus, the more information we have on a vulnerability, the more important the precision rate for its computed MTACV time T will be.

Thus, during the final global evaluation of the attack paths, the precision rates associated with each computed MTACV time T may be taken into account for the evaluation of a given attack path, for example by summing all the precision rates of the vulnerabilities involved in said attack path, which may allow for obtaining for said attack path a global precision rate to be associated with its global time estimation. In particular, such calculus may be sufficient to compute an accurate risk assessment.

As and when new vulnerabilities are discovered for the computer system, the Machine Learning device 3 can fill the blank rows and columns of the global table Tb4, so as to be allowed to evaluate with an increasing relevancy the MTACV times T of the corresponding vulnerabilities V, and then to contribute more and more efficiently to the improvement of the safety of said computer system.

However, as and when a computer system is used, available information about its vulnerabilities V may change, especially as new attributes A, A1, A2 and/or new information sources Db1, Db2 may be created and/or identified for the more ancient vulnerabilities V, whereas attackers may in the meantime be able to create new exploit software tools to compromise said vulnerabilities. Then, the values of the TTBE times A1 and/or of the ET times A2 of the vulnerabilities V may be affected, which may have an impact on the real value of their MTACV times T and on the relevancy of the computed transformation function F.

To take into account these potential changes, the process can further provide for continuously adapting the transformation function F to the discoveries of new attributes A, A1, A2 for an already known vulnerability V of the computer system and/or the discoveries of new vulnerabilities V for said computer system.

To do so, as represented on figure 5, the process further provides a procedure EVP for evaluating the accuracy of the transformation function F in parallel to the computing of a MTACV time T for a given vulnerability V. Moreover, as represented on figure 6, the MTACV time estimation system comprises a device 7 for performing such an evaluation procedure EVP.

The evaluation procedure EVP provides a step EVP1 for checking the availability on information sources of a new TTBE time A1 and/or of a new ET time A2 for the concerned vulnerability V and, in that case, a consecutive step EVP2 for comparing the MTACV time T computed by means of the transformation function F with a real MTACV time that has been inferred by means of said new TTBE time A1 and/or said new ET time A2, the accuracy of the transformation function F being then evaluated according to the result of said comparison.

To do so, the evaluation procedure device 7 comprise a module 7a for performing such a checking among the available information sources Db1, Db2, a module 7b for comparing, in that case, the computed MTACV time T with the real MTACV time inferred from the results of said checking, as well as a module 7c for evaluating the accuracy of the transformation function F according to the result of said comparison.

To check the availability of a new TTBE time A1 and/or a new ET time E2, the process can provide, during the checking step EVP1, to perform technical operations that are similar to the technical operations for gathering attributes A, A1, A2 that were performed during the gathering step TP1 of the training procedure TP, notably upon direct retrieving of said attributes from publicly available databases Db1, Db2 and/or websites and/or upon measurements by means of tests performed by a human security expert and/or through exposure online of a dedicated virtual machine VM to potential attackers.

In particular, as represented on figure 5, the process can provide to restart a new training procedure TP with a new set of known vulnerabilities V for determining a new transformation function F if the evaluated transformation function F is not accurate enough, for example if there are important discrepancies between the MTACV time T calculated by said evaluated transformation function and the real MTACV time inferred by means of a recently gathered new TTBE time A1 and/or new ET time A2.

To do so, the accuracy evaluation module 7c may comprise means to restart such a new training procedure, notably through interaction with the Machine Learning device 3 for obtaining results of the computing of the MTACV times T with the function F and/or with the time comparison module 7b for obtaining results of the comparison of said computed MTACV times T with inferred real MTACV times, and/or through interaction with the training procedure device 4 for launching such a restarting.

Advantageously, the evaluation procedure EVP can be performed regularly, either automatically at given temporal periods, and/or through a continuous checking of the information sources by the module 7a, so as to be able to detect quickly the creation of new attributes A and/or the identification and publication of new batches of vulnerabilities V with measured TTBE times A1, and then to be able to determine quickly an up-to-date transformation function F.

As represented on figure 5, if the checking step EVP1 finds neither a new TTBE time A1, nor a new ET time A2 for the concerned vulnerability V, or if the comparison step EVP2 obtains results showing that the transformation function F is still accurate, the process can then directly go to an ending step E. Moreover, the ending step E can be notably followed for example by a new estimation procedure EP for another new vulnerability V, or even by a new training procedure P for defining another transformation function F for another cluster of similar vulnerabilities V.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for estimating a Mean Time for an Attacker to Compromise a Vulnerability (MTACV) (T) of a computer system, said process providing for:
- a training procedure (TP), which provides:
∘ a step (TP1) for gathering from information sources (Db1, Db2) attributes (A, A1, A2) about known vulnerabilities (V) of said computer system, said attributes comprising at least a Time To Be Exploited (TTBE) (A1) and an Exposure Time (ET) (A2) corresponding to mean times necessary for an attacker respectively to develop an exploit software tool for a vulnerability (V) and to effectively compromise said vulnerability, the MTACV time (T) of a vulnerability (V) corresponding to a combination of TTBE (A1) and ET (A2) times of said vulnerability;
∘ a step (TP2) for creating a reference dataset (D) with said gathered attributes;
∘ a step (TP3) for training a Machine Learning device with said reference dataset to determine a transformation function F from said gathered attributes, said transformation function F allowing for computing the MTACV time (T) for a given vulnerability from known attributes (A, A1, A2) of said vulnerability;
- a MTACV time estimation procedure (EP), which provides, for each new vulnerability (V) of said computer system, for using the determined transformation function F with known attributes (A, A1, A2) of said new vulnerability, so as to compute a MTACV time (T) for said new vulnerability.

2. Process according to claim 1, **characterized in that** the gathering step (TP1) provides for consulting at least one database (Db1, Db2) for gathering attributes (A, A1, A2) about known vulnerabilities (V) of the computer system.

3. Process according to one of claims 1 or 2, **characterized in that** the gathering step (TP1) provides for gathering a TTBE time (A1) and/or an ET time (A2) of a vulnerability (V) by measuring said TTBE time and/or said ET time.

4. Process according to claim 3, **characterized in that** the gathering step (TP1) provides for measuring the TTBE time (A1) and/or the ET time (A2) of a vulnerability (V) through a human testing performed by a security expert.

5. Process according to one of claims 3 or 4, **characterized in that** the gathering step (TP1) provides for automatically measuring the TTBE time (A1) and/or the ET time (A2) of a vulnerability (V) by means of a Virtual Machine (VM) that has been created from known attributes (A) of said vulnerability and deployed online to be exposed to potential attackers, said measuring being performed according to the attacks performed against said virtual machine.

6. Process according to any one of claims 1 to 5, **characterized in that** it further provides a procedure (EVP) for evaluating the accuracy of the transformation function F in parallel to the computing of a MTACV time (T) for a given vulnerability (V), said procedure providing a step (EVP1) for checking the availability on information sources (Db1, Db2) of a new TTBE time (A1) and/or a new ET time (A2) for said vulnerability and, **in that** case, a step (EVP2) for comparing the computed MTACV time (T) with a real MTACV time inferred by means of said new TTBE time and/or new ET time, the accuracy of the transformation function F being evaluated according to the result of said comparison.

7. Process according to one of claims 1 to 6, **characterized in that** it provides to restart a new training procedure (TP) with a new set of known vulnerabilities (V) for determining a new transformation function F if the evaluated transformation function F is not accurate enough.

8. Computer program (P) adapted to perform a process according to any of claims 1 to 7.

9. Computer readable storage medium (2) comprising instructions (I) to cause a data processing apparatus (1) to carry out a process according to any of claims 1 to 7.

10. System for estimating a Mean Time for an Attacker to Compromise a Vulnerability (MTACV) of a computer system, said system comprising:
- a Machine Learning device (3) which comprises means for using a transformation function F for computing, from known attributes (A, A1, A2) of a given vulnerability (V), a MTACV time (T) corresponding to a combination of a Time To Be Exploited (TTBE) (A1) and an Exposure Time (ET) (A2) of said vulnerability, said TTBE and ET times corresponding to mean times necessary for an attacker respectively to develop an exploit software tool for a vulnerability (V) and to effectively compromise said vulnerability;
- a device (4) for performing a training procedure (TP) of said Machine learning device, said training procedure device comprising:
∘ a module (4a) for gathering from information sources (Db1, Db2) attributes (A, A1, A2) about known vulnerabilities (V) of said computer system, said attributes comprising at least a TTBE (A1) and an ET (A2) times;
∘ a module (4b) for creating a reference dataset (D) with said gathered attributes;
∘ a module (4c) for training said Machine Learning device with said reference dataset to determine the transformation function F from the gathered attributes (A, A1, A2) of said known vulnerabilities.

11. System according to claim 10, **characterized in that** it comprises at least one module (5, 6) for measuring a TTBE time (A1) and/or an ET time (A2) to be gathered by the gathering module (4a).

12. System according to claim 11, **characterized in that** it comprises a module (5) for allowing a security expert to perform human testing on a vulnerability to measure the TTBE time (A1) and/or the ET time (A2) thereof.

13. System according to one of claims 11 or 12, **characterized in that** it comprises a module (6) that comprises for creating a Virtual Machine (VM) from known attributes (A, A1, A2) of a vulnerability (V), means for deploying said virtual machine online to be exposed to potential attackers, as well as means for automatically measuring the TTBE time (A1) and/or the ET time (A2) of said vulnerability according to the attacks performed against said virtual machine.

14. System according to any one of claims 10 to 13, **characterized in that** it comprises a device (7) for performing a procedure (EVP) for evaluating the accuracy of the transformation function F in parallel to the computing of a MTACV time (T) for a given vulnerability (V), said evaluation procedure device comprising a module (7a) for checking on information sources (Db1, Db2) the availability of a new TTBE time (A1) and/or a new ET time (A2) for said vulnerability, as well as a module (7b) for comparing, **in that** case, the computed MTACV time (T) with a real MTACV time inferred by means of said new TTBE time and/or new ET time, and a module (7c) for evaluating the accuracy of the transformation function F according to the result of said comparison.

15. System according to any one of claims 10 to 14, **characterized in that** the accuracy evaluation module (7c) comprises means to restart a new training procedure with a new set of known vulnerabilities for determining a new transformation function F if the evaluated transformation function F is not accurate enough.
